(19) Europäisches Patentamt / European Patent Office / Office européen des brevets

(11) **EP 1 864 211 B1**

(12) **FASCICULE DE BREVET EUROPEEN**

(45) Date de publication et mention
de la délivrance du brevet:
**17.02.2010 Bulletin 2010/07**

(21) Numéro de dépôt: **06743602.2**

(22) Date de dépôt: **27.03.2006**

(51) Int Cl.:
***G06F 7/72*** (2006.01)

(86) Numéro de dépôt international:
**PCT/FR2006/000662**

(87) Numéro de publication internationale:
**WO 2006/103341 (05.10.2006 Gazette 2006/40)**

(54) **PROCÉDÉ DE TRAITEMENT DE DONNÉES IMPLIQUANT UNE EXPONENTIATION MODULAIRE ET UN DISPOSITIF ASSOCIÉ**

VERFAHREN ZUR DATENVERARBEITUNG MIT MODULARER POTENZIERUNG UND DAZUGEHÖRIGE VORRICHTUNG

METHOD FOR PROCESSING DATA INVOLVING MODULAR EXPONENTIATION AND RELATED DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.03.2005 FR 0503083**

(43) Date de publication de la demande:
**12.12.2007 Bulletin 2007/50**

(73) Titulaire: **OBERTHUR TECHNOLOGIES**
**92300 Levallois-Perret (FR)**

(72) Inventeurs:
• **BOSCHER, Arnaud**
**F-92800 Puteaux (FR)**
• **GIRAUD, Christophe**
**F-33600 PESSAC (FR)**
• **NACIRI, Robert**
**F-92290 Chatenay Malabry (FR)**

(74) Mandataire: **Quantin, Bruno Marie Henri et al**
**Santarelli**
**14 Avenue de la Grande Armée**
**B.P. 237**
**75822 Paris Cedex 17 (FR)**

(56) Documents cités:
**US-A- 5 991 415**

• **SUNG-MING YEN; SEUNGJOO KIM; SEONGAN LIM; SANGJAE MOONED;: "A countermeasure against one physical cryptanalysis may benefit another attack" INFORMATION SECURITY AND CRYPTOLOGY-ICISC 2001. 4TH INTERNATIONAL CONFERENCE, PROCEEDINGS 6-7 DEC. 2001, vol. 2288, 2000, pages 414-427, XP002364934 berlin**
• **CK KIM, JC HA, SJ MOON, SM YEN, SH KIM, S KIM: "a crt-based rsa system resistant to physical cryptanalysis" FORUM2004.ITRC.OR.KR, [Online] 2004, pages 1-9, XP002364935 Extrait de l'Internet: URL:http://forum2004.itrc.or.kr/PDS/ Paper_ Data/2004_file/3_4_4.pdf> [extrait le 2006-01-26]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé de traitement de données impliquant une exponentiation modulaire, et un dispositif associé.

Les calculs d'exponentiation modulaire sont fréquemment utilisés dans les algorithmes cryptographiques et font en général intervenir dans ce cadre un secret, c'est-à-dire un nombre stocké par le dispositif qui met en oeuvre l'algorithme cryptographique et qui n'est pas accessible de l'extérieur.

Les étapes qui mettent en oeuvre l'exponentiation modulaire sont particulièrement l'objet d'attaques de la part de personnes malintentionnées ; il peut s'agir d'attaques par génération de faute (notamment du type DFA de l'anglais *"Differential Fault Analysis"*) ou par analyse de la consommation de courant du dispositif qui met en oeuvre l'algorithme (du type SPA de l'anglais *"Statistical Power Analysis"* ou en DPA de l'anglais *"Differential Power Analysis"*).

On a de ce fait déjà cherché à protéger ces étapes, en particulier dans le cas où le secret à protéger correspond à l'exposant mis en jeu dans l'exponentiation modulaire.

Ainsi, lorsqu'on utilise un algorithme du type *"square-and-multiply"* (terme anglais signifiant *"mise au carré et multiplication"*) dans lequel une variable est mise à jour par multiplication pour chaque bit de l'exposant valant 1 (et pour ces bits seulement), on a cherché à symétriser le processus, par exemple en effectuant une multiplication leurre lorsque le bit de l'exposant vaut 0, dans le but de contrer les attaques par mesure de courant (parfois référencées SPA) ou par mesure de temps *("timing attacks")*.

Partant de cette idée générale, divers algorithmes protégés contre les attaques de type SPA ont été développés, tels que celui décrit dans l'article *"The Montgomery Powering Ladder"*, de B.S. Kaliski Jr., C.Q. Koç et C. Paar, "Cryptographie Hardware and Embedded Systems" - CHES 2002, pages 291-302.

On a par ailleurs cherché à protéger les algorithmes cryptographiques, et parmi eux ceux utilisant une exponentiation modulaire, des attaques par faute, aux moyens desquelles un attaquant tente de déduire des informations sur le fonctionnement interne de l'appareil qui met en oeuvre le procédé cryptographique en générant un disfonctionnement au sein de ce procédé.

Une solution couramment utilisée pour lutter contre ce dernier type d'attaques consiste à doubler les calculs effectués afin de vérifier que les deux itérations du même calcul donnent le même résultat, ce qui tend à prouver en général qu'aucune faute ne s'est produite lors de leur déroulement. Cette solution implique toutefois de doubler le temps de calcul pour chaque opération que l'on souhaite protéger (sans compter l'étape nécessaire de vérification subséquente) ce qui n'est naturellement pas souhaitable.

Afin de remédier à cet inconvénient, la demande de brevet WO 98/52319 propose, lorsqu'on utilise le théorème des restes chinois (ou CRT de l'anglais *"Chinese Remainder Theorem"*), de profiter de l'identité supposée de deux valeurs obtenues chacune dans l'une des branches de l'algorithme utilisant ce théorème pour vérifier le déroulement *a priori* sans faute de l'algorithme dans ses deux branches.

Cette solution, qui profite d'une particularité des mises en oeuvre utilisant le théorème des restes chinois, n'est toutefois pas applicable à d'autres types d'implémentation. On peut d'ailleurs rappeler à ce sujet que l'utilisation du théorème des restes chinois implique la connaissance de la décomposition en nombres premiers *p, q* du module public *n=p.q*.

Enfin, cette solution pratique une vérification au moyen de données employées à une étape intermédiaire du processus, et ne permet donc pas une vérification du fonctionnement sans faute en tout point du processus, comme pourrait le souhaiter le concepteur : par exemple, cette technique ne permet pas de protéger le procédé en cas d'attaques par faute lors de la recombinaison du résultat obtenu par chacune des branches de l'algorithme.

Afin d'améliorer cet état de fait, et donc de proposer un procédé de traitement de données impliquant une exponentiation modulaire protégée à la fois contre les attaques par analyse de courant et les attaques par faute, l'invention propose un procédé de traitement (en général cryptographique) de données, dans lequel un message/subit une première opération avec par exemple une clé secrète, comprenant une étape de mise à jour par une seconde opération d'une première variable ou d'une seconde variable selon qu'un bit correspondant de l'opérande vaut 0 ou 1, caractérisé par une étape de test d'une relation entre une première valeur issue de la première variable et une seconde valeur issue de la seconde variable, afin de détecter une faute au cours du calcul.

En effet, du fait de la complémentarité des mises à jour de la première variable et de la seconde variable, il existe une relation qui doit normalement être vérifiée entre les deux variables, ou entre les valeurs qui en sont issues. La non-vérification du test indique donc au contraire une faute au cours du calcul et permet ainsi de détecter une attaque, même lorsque l'attaque est dirigée contre une opération leurre (cas des attaques "*safe error"*).

La première valeur et la seconde valeur sont par exemple précisément celles de la première variable et de la seconde variable ; dans ce cas, la première variable et la seconde variable peuvent elles-mêmes être utilisées pour le test, ce qui implique notamment un gain en mémoire.

La première opération est par exemple une exponentiation modulaire, auquel cas la seconde opération est une multiplication modulaire et l'opérande est un exposant.

L'étape de test peut alors comprendre la comparaison du produit de la première variable et de la seconde variable à une troisième variable mise à jour quel que soit le bit correspondant de l'opérande.

Une étape de test alternative comprend la comparaison de la première variable au produit de l'élément et de la seconde variable.

Selon une autre réalisation possible, la première opération est une multiplication sur une courbe elliptique et la seconde opération est une addition sur la courbe elliptique.

La relation peut être indépendante de l'opérande, ce qui permet de simplifier l'étape de test.

L'étape de vérification peut notamment être appliquée au résultat de la première opération, c'est-à-dire après les étapes de calcul impliquant la seconde opération.

Le procédé peut également comprendre une étape de vérification de la relation pour chaque bit de l'opérande. On détecte ainsi une attaque par faute éventuelle dès qu'elle a perturbé un calcul mettant en oeuvre la seconde opération, ce qui garantit un bon niveau de sécurité tout au long des étapes mettant en oeuvre la première opération.

Selon un mode de mise en oeuvre possible, la première valeur résulte d'une première recombinaison selon le théorème des restes chinois impliquant la première variable et la seconde valeur résulte d'une seconde recombinaison selon le théorème des restes chinois impliquant la seconde variable.

L'invention propose également un dispositif de traitement de données permettant une première opération sur un message au moyen d'une clé secrète, comprenant des moyens de mis à jour par une seconde opération d'une première variable ou d'une seconde variable selon qu'un bit correspondant de l'opérande vaut 0 ou 1, caractérisé par des moyens de test d'une relation entre la première et la seconde variable afin de détecter une faute au cours du calcul.

Un tel dispositif est par exemple inclus dans une carte à microcircuit.

D'autres caractéristiques et avantages de l'invention apparaîtront à la lumière de la description qui suit, faits en référence aux dessins annexés dans lesquels :

- la figure 1 représente un procédé de traitement de données selon un premier mode de réalisation de l'invention ;
- la figure 2 représente un procédé de traitement de données selon un second mode de réalisation de l'invention ;
- la figure 3 représente un procédé de traitement de données selon un troisième mode de réalisation de l'invention.

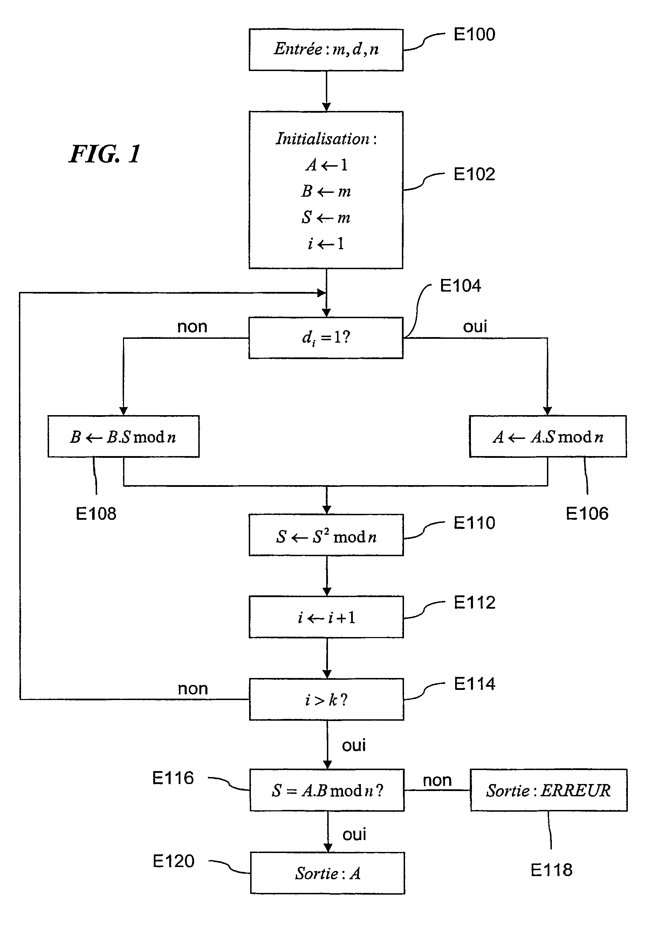

La figure 1 représente un exemple de procédé permettant un calcul d'exponentiation modulaire et réalisée conformément aux enseignements de l'invention. L'exemple donné ici est décrit sous forme d'un sous-programme qui reçoit des valeurs en entrée et émet en sortie le résultat du calcul d'exponentiation modulaire. On comprend toutefois que l'invention ne se limite pas à de tels sous-programmes.

L'étape E100 de la figure 1 correspond à la réception en entrée des valeurs $m$, $d$ et $n$ en fonction desquelles on souhaite réaliser l'exponentiation modulaire, c'est-à-dire obtenir le nombre $m^d \bmod n$.

Dans la suite, on exprimera le nombre d sous forme de sa décomposition binaire $(d_k, ..., d_1)$, où $\kappa$ est le nombre de bits composant le nombre $d$, où chaque $d_i$ constitue un bit du nombre correspondant avec notamment $d_1$ le bit de poids le plus faible et $d_\kappa$ le bit de poids le plus fort.

On a donc $d = \Sigma d_i \cdot 2^{i-1}$.

Dans les algorithmes cryptographiques, un tel calcul d'exponentiation modulaire est en général utilisé avec le nombre m représentant un message, le nombre d la clé secrète et le nombre $n$ le module public. On cherche donc dans ce cadre à protéger en particulier la détermination du nombre $d$ (c'est-à-dire de ses composantes binaires $d_i$) par l'observation de la mise en oeuvre du procédé dans une entité électronique ou la génération de fautes dans ce procédé.

Le procédé décrit à la figure 1 débute à proprement parler à l'étape E102 d'initialisation des registres utilisés dans ce sous-programme, à savoir l'initialisation à la valeur 1 d'une variable $A$, l'initialisation à la valeur $m$ d'une variable $B$ et d'une variable $S$ et l'initialisation à la valeur 1 d'une variable $i$ servant d'indice.

On passe alors à l'étape E104 (qui constitue la première étape d'une boucle comme décrit ci-après) à laquelle on teste si le bit $d_i$ (c'est-à-dire le bit de rang i dans le nombre $d$) vaut 1.

Dans l'affirmative, on passe à l'étape E106 à laquelle on procède au calcul de la valeur $A.S \bmod n$, puis on mémorise le résultat de ce calcul dans la variable $A$ (ici avec écrasement de la valeur précédemment stockée dans cette variable).

Autrement dit, on met à jour la variable $A$ au moyen d'une multiplication modulaire par la variable S qui, du fait de l'étape E110 décrite dans la suite, vaut $m^{2i}$ lors de cette mise à jour, quelle que soit l'itération i concernée dans la boucle.

Si le test de l'étape E104 est négatif (c'est-à-dire si le bit $d_i$ est nul), on procède à l'étape E108 au calcul de $B.S \bmod n$, puis on met à jour la variable $B$ avec le résultat de ce calcul.

Ainsi, selon la valeur du bit $d_i$, on met à jour soit la variable $A$, soit la variable $B$ par multiplication modulaire par la variable $S$.

Quel que soit le résultat du test de l'étape E104, le procédé se poursuit (après l'étape E106 ou l'étape E108) à l'étape E110, à laquelle on calcule $S^2 \bmod n$, puis on mémorise le résultat de ce calcul dans la variable $S$ (avec écrasement de la valeur précédemment stockée dans cette variable).

On incrémente alors la valeur de l'indice i à l'étape E112, puis on teste la nouvelle valeur de l'indice i à l'étape E114 : si *i* est strictement supérieur à *k*, on passe à l'étape E116 décrite ci-après, alors que dans la négative (c'est-à-dire tant que *i* est inférieur ou égal à *k*) l'étape E114 est suivie de l'étape E104 précédemment décrite (ce qui réalise la boucle évoquée précédemment).

Lorsque *i* est strictement supérieur à *k* après incrémentation, c'est-à-dire que l'ensemble des bits du nombre *d* ont été traités, on passe à l'étape E116 à laquelle on teste la validité de la relation suivante : *S=A.B mod n.*

En fonctionnement normal, du fait des mises à jour complémentaires des variables *A* et *B* et de la mise à jour systématique de la variable *S* comme décrit ci-dessus, la relation *S=A.B mod n* est vérifiée.

Par conséquent, si le test de l'étape E116 est positif, on considère qu'un fonctionnement normal (c'est-à-dire sans faute) a eu lieu et on procède à l'étape E120 à laquelle on renvoie la valeur de sortie *A*, qui du fait de sa mise à jour par multiplication modulaire pour les seuls bits de d valant 1, vaut $m^d \bmod n$.

En revanche, si le test de l'étape E116 est négatif, on considère qu'une faute a eu lieu lors du traitement décrit, et on passe par conséquent à l'étape E118 à laquelle on retourne une valeur d'erreur.

Dans le cadre des algorithmes cryptographiques, une telle détection de faute est considérée comme la conséquence d'une attaque par faute visant la détermination de la clé secrète *d*. On ne retournera donc naturellement aucune information susceptible d'aider l'attaquant dans sa recherche de la connaissance de la clé secrète. Par contre, on pourra alors déclencher des mesures de protection, telles que par exemple le blocage de l'entité électronique mettant en oeuvre le procédé (entité qui est par exemple une carte à microcircuit).

On peut remarquer que le test utilise ici des variables qui sont nécessaires à la mise en oeuvre du calcul symétrisé de l'exponentiation modulaire ; ce mode de réalisation permet ainsi de réaliser l'étape de test sans nécessiter l'utilisation d'autres variables.

On peut également remarquer que la relation testée n'implique pas la clé secrète *d* et ne nécessite pas en outre la connaissance de la clé publique (c'est-à-dire la connaissance du nombre e tel que *d.e* = 1mod(*p* -1) (*q*-1)).

Par ailleurs, la relation fait intervenir les deux variables *A* et *B* modifiées alternativement au cours du procédé de calcul d'exponentiation modulaire si bien que la modification de l'une ou de l'autre de ces deux variables, au moyen par exemple d'une attaque par faute, se traduira par la non-vérification de la relation. On lutte ainsi efficacement contre les attaques dites "safe *error"* qui cherchent à détecter l'absence éventuelle de conséquence d'une faute pour en déduire que l'opération concernée n'est pas effectivement utilisée par le calcul.

En variante, on pourrait procéder au test de l'étape E116 à chaque itération de la boucle (c'est-à-dire par exemple insérer une étape de test similaire entre les étapes E110 et E112) puisque la relation est vérifiée en fonctionnement normal à chaque itération.

Dans ce cas, toute détection d'une erreur (par non-vérification de la relation) pourra être interprétée comme le résultat d'une attaque par faute ; il est donc préférable dans ce cas que la non-vérification de la relation mette fin au calcul d'exponentiation modulaire, alors que sa vérification entraîne la poursuite normale des itérations.

Quelle que soit la variante mise en oeuvre (vérification en fin de calcul comme sur la figure 1 ou à chaque itération comme il vient d'être décrit), on remarque, comme bien visible sur la figure 1, que le nombre d'étapes réalisées et le type des opérations effectuées au cours de ces étapes ne varie pas en fonction de la clé secrète *d* , ce qui permet une sécurisation du procédé contre les attaques par mesure de courant de type SPA.

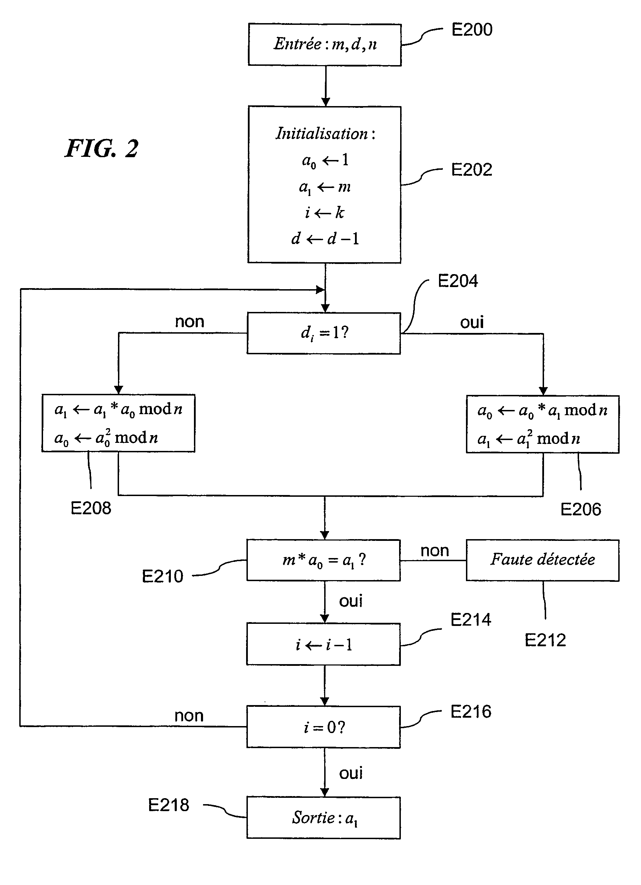

La figure 2 représente un second mode de réalisation de l'invention.

Comme pour le premier mode de réalisation, on a désigné par étape d'entrée E200 la réception par le sous-programme décrit ici des valeurs *m, d* et *n*. Comme précédemment, il ne s'agit naturellement que d'un exemple possible de mise en oeuvre de l'invention.

En considération de ces valeurs, on procède à une étape d'initialisation E202, au cours de laquelle on initialise une variable $a_0$ à 1, une variable $a_1$ à *m* et une variable *i* à la valeur *k* qui représente comme précédemment le nombre de bits de la clé secrète *d (k* est une donnée fixe du système cryptographique utilisé). On décrémente également *d* d'une unité du fait du mode de réalisation utilisé ici pour le calcul d'exponentiation modulaire.

On entre alors dans une boucle permettant à proprement parler le calcul de l'exponentiation modulaire, à commencer par une étape E204 de test de la valeur du bit $d_i$ . (Les notations relatives à la décomposition de la clé *d* en bits est identique à celle présentée au sujet du premier mode de réalisation et ne sera donc pas reprise ici.)

Si le bit de rang *i* dans la clé *d* vaut 1, on passe à l'étape E206 à laquelle on procède tout d'abord à la multiplication de la variable $a_0$ par la variable $a_1$ (c'est-à-dire au calcul de $a_0$ *$a_1$ mod n), dont on mémorise le résultat dans la variable $a_0$ (avec écrasement). On procède également au sein de l'étape E206 au calcul de la valeur $a_1^2$ mod *n* et la mise à jour de la variable $a_1$ par le résultat de ce calcul.

S'il est déterminé à l'étape E204 que le bit de rang *i* de la clé secrète *d* vaut zéro (c'est-à-dire si $d_i$ = 0), on procède à l'étape E208 au cours de laquelle on calcule le produit de la variable $a_1$ par la variable $a_0$ (c'est-à-dire que l'on calcule $a_1$ * $a_0$ mod *n*), on mémorise la valeur obtenue dans $a_1$ avec écrasement, on calcule le carré modulaire de la variable $a_0$ (c'est-à-dire la valeur

$a_0^2$ mod $n$) et on stocke le résultat de cette dernière opération dans la variable $a_0$ avec écrasement.

On peut remarquer que les étapes E206 et E208, mises en oeuvre respectivement lorsque le bit de la clé secrète $d$ concerné lors de l'itération $i$ vaut 1 ou 0 sont totalement symétriques par rapport aux variables $a_0$ et $a_1$ , l'une de ces variables étant dans chaque cas mise à jour par multiplication par l'autre variable.

Quel que soit le résultat du test de l'étape E204, on procède, après l'étape E206 ou l'étape E208, à l'étape E210 à laquelle on teste la relation suivante : $m * a_0 = a_1$.

En fonctionnement normal, c'est-à-dire lorsque les opérations de l'étape E206 ou E208 précédente ont été réalisées sans faute, cette relation doit être vérifiée.

Par conséquent, si le test de l'étape E210 est positif, on considère que le déroulement du calcul a lieu sans faute, et on poursuit donc le traitement à l'étape E214 comme décrit ci-après.

En revanche, si l'étape de test E210 ne permet pas la vérification de la relation $m * a_0 = a_1$, on en déduit que l'un des calculs effectués à l'étape précédente E206 ou E208 a subi une perturbation, telle que par exemple une attaque par faute.

C'est pourquoi si l'étape de test E210 conduit à un résultat négatif, on procède à une étape E212 à laquelle on considère qu'une faute est détectée et nécessite un traitement adéquat. Comme vu précédemment, ce traitement peut varier selon les applications.

Comme déjà indiqué, le fonctionnement normal conduit à l'étape E214, à laquelle on décrémente la variable $i$. On teste alors à l'étape E216 si la variable $i$ a atteint 0. Dans la négative, tous les bits de la clé secrète $d$ n'ont pas été traités et on procède à l'itération suivante de la boucle en passant à l'étape E204 déjà décrite. Dans l'affirmative, l'ensemble des bits de la clé secrète ont été traités et le calcul d'exponentiation modulaire est alors terminé : la variable $a_1$ correspond au résultat souhaité, soit $m^d$ mod $n$. On retourne donc en sortie du sous-programme décrit ici la valeur $a_1$ à l'étape E218.

En variante, l'étape E210 peut être réalisée entre les étapes E216 et E218, en remplacement ou en supplément de l'étape E210 décrite plus haut. Dans le cas où l'étape E210 n'est plus réalisée dans la boucle, mais seulement après la boucle (entre les étapes E216 et E218 par exemple), on allège les phases de test de l'algorithme.

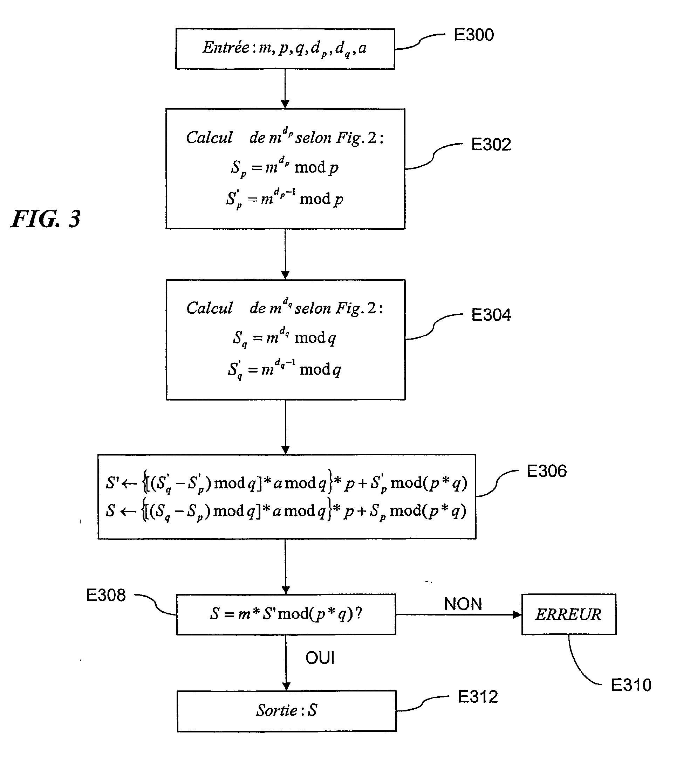

On va à présent décrire en référence à la figure 3 un troisième mode de réalisation de l'invention, mis en oeuvre dans le cadre d'une exponentiation modulaire utilisant le théorème des restes chinois (ou CRT).

L'algorithme présenté à la figure 3 reçoit en entrée le nombre $m$ (ou message) dont on souhaite réaliser l'exponentiation modulaire, les deux nombres premiers $p, q$ composant le module public $n = p.q$, les composantes $d_p, d_q$ de la clé secrète $d$ relativement à $p$ et $q$ (où $d_p = d$ mod($p$-1) et $d_q = d$ mod($q$-1)) et le nombre $a$ tel que $a = $

$p^{-1}$ mod$q$ .

On procède alors à l'étape E302 à l'exponentiation modulaire partielle du nombre $m$ à l'exposant $d_p$ selon un algorithme du type de celui décrit précédemment en référence à la figure 2. On obtient ainsi à la fin de cet algorithme un nombre $S_p$ (correspondant au nombre $a_1$ en figure 2) résultat de l'exponentiation modulaire partielle (c'est-à-dire $S_p = m^{d_p}$ mod $p$ ) et un nombre $S_p$ (correspondant au nombre $a_0$ en figure 2) tel que $S_p = m.S_p$

On procède de même lors d'une étape E304 à l'exponentiation modulaire partielle au moyen de l'exposant $d_q$ selon un algorithme comme celui décrit à la figure 2, qui permet d'obtenir $S_q = m^{d_q} \bmod q$ ($S_q$ correspond au nombre $a_1$ en figure 2), ainsi que $S_q^{'}$ (correspondant à $a_0$ en figure 2) qui vérifie en fonctionnement normal $S_q = m.S_q^{'}$ .

On passe alors à une étape E306 de recombinaison des résultats modulaires partiels selon la formule des restes chinois. On procède ainsi d'une part à la combinaison des valeurs $S_p^{'}$ et $S_q^{'}$ avec pour résultat S', et d'autre part à la recombinaison des valeurs $S_p$ et $S_q$ , ce qui permet d'obtenir la valeur $S$.

Les résultats de l'exponentiation modulaire partielle étant $S_p$ et $S_q$ comme vu respectivement aux étapes E302 et E304, la variable $S$ contient le résultat de l'exponentiation modulaire (soit $S = m^d$ mod($p * q$) ). Par ailleurs, du fait des relations mentionnées ci-dessus entre $S_p^{'}$ et $S_p$ d'une part et $S_q^{'}$ et $S_q$ d'autre part, on a également après recombinaison en fonctionnement normal la relation $S = m*S'$mod($p*q$).

C'est pourquoi on vérifie l'exactitude de cette relation à l'étape de test E308.

En cas de vérification négative lors de l'étape de teste, on procède à une étape E310 où l'on considère qu'une erreur a été produite lors du calcul, probablement causée par une attaque par génération de faute. On peut alors appliquer un traitement adapté comme décrit à propos des autres modes de réalisation.

Si en revanche on vérifie à l'étape E308 la relation $S = m *S'$mod($p*q$), on considère que l'algorithme s'est déroulé sans faute et on procède à l'étape E312, à laquelle on renvoie la valeur S qui correspond, comme indiqué précédemment, au résultat de l'exponentiation modulaire.

Les modes de réalisation qui viennent d'être décrits ne sont que des exemples possibles de mise en oeuvre de l'invention. Celle-ci s'applique naturellement dans d'autres cas, par exemple à d'autres opérations que l'exponentiation modulaire décomposée en multiplications modulaires : elle s'applique ainsi également aux algorithmes cryptographiques basés sur des courbes elliptiques dans lesquelles on effectue des multiplications sur ces courbes décomposées comme un ensemble d'additions.

En outre, l'invention peut s'appliquer à d'autres systèmes de calcul que ceux décrits, tels que par exemple l'arithmétique de Montgomery.

Par ailleurs, il existe différentes formules de recombinaison selon la méthode CRT et l'invention peut s'appliquer à ces différentes formules.

## Revendications

1. Procédé de traitement cryptographique de données, dans lequel un message (m) subit une première opération avec une clé secrète (d), comprenant une étape de mise à jour par une seconde opération d'une première variable $(B; a_0; S'_p, S'_q)$ ou d'une seconde variable $(A ; a_1 ; S_p, S_q)$ selon qu'un bit correspondant de la clé secrète vaut 0 ou 1, **caractérisé par** une étape de test (E116; E210; E308) d'une relation entre une première valeur $(B; a_0; S')$ issue de la première variable et une seconde valeur $(A; a_1; S)$ issue de la seconde variables, afin de détecter une faute au cours du calcul.

2. Procédé selon la revendication 1, **caractérisé en ce que** la première valeur est la valeur de la première variable et **en ce que** la seconde valeur est la valeur de la seconde variable.

3. Procédé selon la revendication 1 ou 2, **caractérisé en ce que** l'étape de test (E116) est appliquée au résultat de la première opération.

4. Procédé selon la revendication 1, **caractérisé en ce que** la première valeur $(S')$ résulte d'une première recombinaison selon le théorème des restes chinois impliquant la première variable $(S'_p, S'_q)$ et **en ce que** la seconde valeur $(S)$ résulte d'une seconde recombinaison selon le théorème des restes chinois impliquant la seconde variable $(S_p, S_q)$.

5. Procédé selon l'une des revendications 1 à 4, **caractérisé en ce que** la première opération est une exponentiation modulaire, **en ce que** la seconde opération est une multiplication modulaire et **en ce que** la clé secrète est un exposant.

6. Procédé selon la revendication 5, **caractérisé en ce que** l'étape de test comprend la comparaison du produit de la première variable $(B)$ et de la seconde variable $(A)$ à une troisième variable $(S)$ mise à jour par le calcul d'un carré quel que soit le bit correspondant de la clé secrète.

7. Procédé selon la revendication 5, **caractérisé en ce que** l'étape de test comprend la comparaison de la seconde variable $(a_1)$ au produit de l'élément $(m)$ et de la première variable $(a_0)$.

8. Procédé selon l'une des revendications 1 à 4, **caractérisé en ce que** la première opération est une multiplication sur une courbe elliptique et **en ce que** la seconde opération est une addition sur la courbe elliptique.

9. Procédé selon l'une des revendications 1 à 8, **caractérisé en ce que** la relation est indépendante de la clé secrète.

10. Dispositif de traitement cryptographique de données permettant une première opération sur un message au moyen d'une clé secrète, comprenant :

    - des moyens de mis à jour par une seconde opération d'une première variable ou d'une seconde variable selon qu'un bit correspondant de la clé secrète vaut 0 ou 1,
    **caractérisé par** :
    - des moyens de test d'une relation entre une première valeur issue de la première variable et une seconde valeur issue de la seconde variable, afin de détecter une faute au cours du calcul.

11. Dispositif selon la revendication 10, **caractérisé en ce que** la première valeur est la valeur de la première variable et **en ce que** la seconde valeur est la valeur de la seconde variable.

12. Dispositif selon la selon la revendication 10 ou 11, **caractérisé en ce que** les moyens de test sont appliqués au résultat de la première opération.

13. Dispositif selon la revendication 10, **caractérisé par** des moyens pour obtenir la première valeur $(S')$ comme résultat d'une première recombinaison selon le théorème des restes chinois impliquant la première variable $(S'_p, S'_q)$ et par des moyens pour obtenir la seconde valeur $(S)$ comme résultat d'une seconde recombinaison selon le théorème des restes chinois impliquant la seconde variable $(S_p, S_q)$

14. Dispositif selon l'une des revendications 10 à 13, **caractérisé en ce que** la première opération est une exponentiation modulaire, **en ce que** la seconde opération est une multiplication modulaire et **en ce que** la clé secrète est un exposant.

**15.** Dispositif selon la revendication 14, **caractérisé en ce que** les moyens de test comprennent des moyens de comparaison du produit de la première variable ($B$) et de la seconde variable ($A$) à une troisième variable ($S$) mise à jour par le calcul d'un carré quel que soit le bit correspondant de la clé secrète.

**16.** Dispositif selon la revendication 14, **caractérisé en ce que** les moyens de test comprennent des moyens de comparaison de la première variable ($a_1$) au produit de l'élément ($m$) et de la seconde variable ($a_0$).

**17.** Dispositif selon l'une des revendications 10 à 13, **caractérisé en ce que** la première opération est une multiplication sur une courbe elliptique et **en ce que** la seconde opération est une addition sur la courbe elliptique.

**18.** Dispositif selon l'une des revendications 10 à 17, **caractérisé en ce que** la relation est indépendante de la clé secrète.

**19.** Carte à microcircuit comprenant un dispositif selon l'une des revendications 10 à 18.

**Claims**

**1.** Cryptographic method for processing data, in which a message (m) is subjected to a first operation with a secret key (d), including a step of updating by a second operation a first variable $(B; a_0; S'p, S'q)$ or a second variable ($A$; $a_1$; $S_p$, $S_q$), depending on whether a corresponding bit of the secret key has the value 0 or 1, **characterised by** a step (E116; E210; E308) of testing a relationship between a first value ($B$; $a_0$; $S'$) derived from the first variable and a second value ($A$; $a_1$; $S$) derived from the second variable, in order to detect an error during calculation.

**2.** Method according to claim 1, **characterised in that** the first value is the value of the first variable and the second value is the value of the second variable.

**3.** Method according to claim 1 or 2, **characterised in that** the test step (E116) is applied to the result of the first operation.

**4.** Method according to claim 1, **characterised in that** the first value ($S'$) results from a first recombination in accordance with the Chinese Remainders Theorem involving the first variable ($S'_p$, $S'_q$) and the second value ($S$) results from a second recombination in accordance with the Chinese Remainders Theorem involving the second variable ($S_p$, $S_q$).

**5.** Method according to one of claims 1 to 4, **charac-** terised in that the first operation is a modular exponentiation, the second operation is a modular multiplication, and the secret key is an exponent.

**6.** Method according to claim 5, **characterised in that** the test step includes comparing the product of the first variable ($B$) and the second variable ($A$) to a third variable ($S$) updated by calculating a square regardless of the corresponding bit of the secret key.

**7.** Method according to claim 5, **characterised in that** the test step includes comparing the second variable ($a_1$) to the product of the element ($m$) and the first variable ($a_0$).

**8.** Method according to one of claims 1 to 4, **characterised in that** the first operation is a multiplication on an elliptical curve and the second operation is an addition on the elliptical curve.

**9.** Method according to one of claims 1 to 8, **characterised in that** the relationship is independent of the secret key.

**10.** Cryptographic device for processing data enabling a first operation on a message by means of a secret key, including:

- means for updating by a second operation of either a first variable or a second variable depending on whether a corresponding bit of the secret key has the value 0 or 1,
**characterised by**:
- means for testing a relationship between a first value derived from the first variable and a second value derived from the second variable, in order to detect an error during calculation.

**11.** Device according to claim 10, **characterised in that** the first value is the value of the first variable and the second value is the value of the second variable.

**12.** Device according to claim 10 or 11, **characterised in that** the test means are applied to the result of the first operation.

**13.** Device according to claim 10, **characterised by** means for obtaining the first value ($S'$) as the result of a first recombination in accordance with the Chinese Remainders Theorem involving the first variable ($S'_p$, $S'_q$) and means for obtaining the second value ($S$) as the result of a second recombination in accordance with the Chinese Remainders Theorem involving the second variable ($S_p$, $S_q$).

**14.** Device according to one of claims 10 to 13, **characterised in that** the first operation is a modular exponentiation, the second operation is a modular multiplication, and the secret key is an exponent.

15. Device according to claim 14, **characterised in that** the test means include means for comparing the product of the first variable ($B$) and the second variable ($A$) to a third variable ($S$) updated by calculating a square regardless of the corresponding bit of the secret key.

16. Device according to claim 14, **characterised in that** the test means include means for comparing the first variable ($a_1$) to the product of the element ($m$) and the second variable ($a_0$).

17. Device according to one of claims 10 to 13, **characterised in that** the first operation is a multiplication on an elliptical curve and the second operation is an addition on the elliptical curve.

18. Device according to one of claims 10 to 17, **characterised in that** the relationship is independent of the secret key.

19. Microcircuit card comprising a device according to one of claims 10 to 18.

**Patentansprüche**

1. Verfahren zum kryptographischen Verarbeiten von Daten, in dem eine Nachricht ($m$) einer ersten Operation mit einem geheimen Schlüssel ($d$) unterworfen wird, das einen Schritt des Aktualisierens einer ersten Variablen ($B$; $a_0$; $S'_p$, $S'_q$) oder einer zweiten Variablen ($A$; $a_1$; $S_p$, $S_q$) durch eine zweite Operation, je nachdem, ob ein entsprechendes Bit des geheimen Schlüssels den Wert 0 oder 1, hat, umfasst, **gekennzeichnet durch** einen Schritt (E116; E210; E308) zum Prüfen einer Beziehung zwischen einem ersten Wert ($B$; $a_0$; $S'$), der von der ersten Variablen stammt, und einem zweiten Wert ($A$; $a_1$; $S$), der von der zweiten Variablen stammt, um einen Fehler im Verlauf der Rechnung zu erfassen.

2. Verfahren nach Anspruch 1, **dadurch gekennzeichnet, dass** der erste Wert der Wert der ersten Variablen ist und dass der zweite Wert der Wert der zweiten Variablen ist.

3. Verfahren nach Anspruch 1 oder 2, **dadurch gekennzeichnet, dass** der Prüfschritt (E116) auf das Ergebnis der ersten Operation angewendet wird.

4. Verfahren nach Anspruch 1, **dadurch gekennzeichnet, dass** sich der erste Wert ($S'$) aus einer ersten Rekombination gemäß dem chinesischen Restsatz ergibt, die die erste Variable ($S'_p$, $S'_q$) beinhaltet, und dass sich der zweite Wert ($S$) aus einer zweiten Rekombination gemäß dem chinesischen Restsatz ergibt, die die zweite Variable ($S_p$, $S_q$) beinhaltet.

5. Verfahren nach einem der Ansprüche 1 bis 4, **dadurch gekennzeichnet, dass** die erste Operation eine diskrete Exponentialfunktion ist, dass die zweite Operation eine diskrete Multiplikation ist und dass der geheime Schlüssel ein Exponent ist.

6. Verfahren nach Anspruch 5, **dadurch gekennzeichnet, dass** der Prüfschritt den Vergleich des Produkts aus der ersten Variablen ($B$) und der zweiten Variablen ($A$) mit einer dritten Variablen ($S$), die durch Berechnung eines Quadrats unabhängig vom entsprechenden Bit des geheimen Schlüssels aktualisiert wird, umfasst.

7. Verfahren nach Anspruch 5, **dadurch gekennzeichnet, dass** der Prüfschritt den Vergleich der zweiten Variablen ($a_i$) mit dem Produkt aus dem Element ($m$) und der ersten Variablen ($a_0$) umfasst.

8. Verfahren nach einem der Ansprüche 1 bis 4, **dadurch gekennzeichnet, dass** die erste Operation eine Multiplikation an einer elliptischen Kurve ist und dass die zweite Operation eine Addition an der elliptischen Kurve ist.

9. Verfahren nach einem der Ansprüche 1 bis 8, **dadurch gekennzeichnet, dass** die Beziehung von dem geheimen Schlüssel unabhängig ist.

10. Vorrichtung zum kryptographischen Verarbeiten von Daten, die eine erste Operation an einer Nachricht mittels eines geheimen Schlüssels ermöglicht, mit:

    - Mitteln zum Aktualisieren einer ersten Variablen oder einer zweiten Variablen durch eine zweite Operation je nachdem, ob ein entsprechendes Bit des geheimen Schlüssels den Wert 0 oder 1 hat,
    **gekennzeichnet durch**:
    - Mittel zum Prüfen einer Beziehung zwischen einem ersten Wert, der von der ersten Variablen stammt, und einem zweiten Wert, der von der zweiten Variablen stammt, um einen Fehler während der Rechnung zu erfassen.

11. Vorrichtung nach Anspruch 10, **dadurch gekennzeichnet, dass** der erste Wert der Wert der ersten Variablen ist und dass der zweite Wert der Wert der zweiten Variablen ist.

12. Vorrichtung nach Anspruch 10 oder 11, **dadurch gekennzeichnet, dass** die Prüfmittel auf das Ergebnis der ersten Operation angewendet werden.

**13.** Vorrichtung nach Anspruch 10, **gekennzeichnet durch** Mittel, um den ersten Wert (S') als Ergebnis einer ersten Rekombination gemäß dem chinesischen Restsatz, die die erste Variable ($S'_p$, $S'_q$) beinhaltet, zu erhalten, und **durch** Mittel, um den zweiten Wert (S) als Ergebnis einer zweiten Rekombination gemäß dem chinesischen Restsatz, die die zweite Variable ($S_p$, $S_q$) beinhaltet, zu erhalten.

**14.** Vorrichtung nach einem der Ansprüche 10 bis 13, **dadurch gekennzeichnet, dass** die erste Operation eine diskrete Exponentialfunktion ist, dass die zweite Operation eine diskrete Multiplikation ist und dass der geheime Schlüssel ein Exponent ist.

**15.** Vorrichtung nach Anspruch 14, **dadurch gekennzeichnet, dass** die Prüfmittel Mittel zum Vergleichen des Produkts aus der ersten Variablen (B) und der zweiten Variablen (A) mit einer dritten Variablen (S), die durch die Berechnung eines Quadrats unabhängig vom entsprechenden Bit des geheimen Schlüssels aktualisiert wird, umfassen,

**16.** Vorrichtung nach Anspruch 14, **dadurch gekennzeichnet, dass** die Prüfmittel Mittel zum Vergleichen der ersten Variablen ($a_1$) mit dem Produkt aus dem Element (m) und der zweiten Variable ($a_0$) umfassen.

**17.** Vorrichtung nach einem der Ansprüche 10 bis 13, **dadurch gekennzeichnet, dass** die erste Operation eine Multiplikation an einer elliptischen Kurve ist und dass die zweite Operation eine Addition an der elliptischen Kurve ist.

**18.** Vorrichtung nach einem der Ansprüche 10 bis 17, **dadurch gekennzeichnet, dass** die Beziehung von dem geheimen Schlüssel unabhängig ist.

**19.** Mikroschaltungskarte, die eine Vorrichtung nach einem der Ansprüche 10 bis 18 enthält.

*FIG. 1*

$Entrée: m, d, n$ —— E100

$Initialisation:$
$A \leftarrow 1$
$B \leftarrow m$
$S \leftarrow m$
$i \leftarrow 1$ —— E102

E104

non —— $d_i = 1?$ —— oui

$B \leftarrow B.S \bmod n$

$A \leftarrow A.S \bmod n$

E108

E106

$S \leftarrow S^2 \bmod n$ —— E110

$i \leftarrow i+1$ —— E112

non —— $i > k?$ —— E114

oui

E116 —— $S = A.B \bmod n?$ —— non —— $Sortie: ERREUR$

oui

E120 —— $Sortie: A$

E118

*FIG. 2*

Entrée : $m, d, n$  — E200

Initialisation :
$a_0 \leftarrow 1$
$a_1 \leftarrow m$
$i \leftarrow k$
$d \leftarrow d - 1$  — E202

— E204

non ← $d_i = 1?$ → oui

$a_1 \leftarrow a_1 * a_0 \bmod n$
$a_0 \leftarrow a_0^2 \bmod n$

$a_0 \leftarrow a_0 * a_1 \bmod n$
$a_1 \leftarrow a_1^2 \bmod n$

E208

E206

E210 — $m * a_0 = a_1?$ — non — *Faute détectée*

oui

E212

$i \leftarrow i - 1$ — E214

non — $i = 0?$ — E216

oui

E218 — *Sortie : $a_1$*

*FIG. 3*

$Entrée : m, p, q, d_p, d_q, a$ — E300

$$Calcul \quad de \; m^{d_p} \, selon \, Fig. 2:$$
$$S_p = m^{d_p} \bmod p$$
$$S'_p = m^{d_p - 1} \bmod p$$
E302

$$Calcul \quad de \; m^{d_q} \, selon \, Fig. 2:$$
$$S_q = m^{d_q} \bmod q$$
$$S'_q = m^{d_q - 1} \bmod q$$
E304

$$S' \leftarrow \left\{ [(S'_q - S'_p) \bmod q] * a \bmod q \right\} * p + S'_p \bmod(p*q)$$
$$S \leftarrow \left\{ [(S_q - S_p) \bmod q] * a \bmod q \right\} * p + S_p \bmod(p*q)$$
E306

E308 — $S = m * S' \bmod(p*q)?$

NON → *ERREUR*

E310

OUI

$Sortie : S$ — E312

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9852319 A

**Littérature non-brevet citée dans la description**

- **de B.S. Kaliski Jr. ; C.Q. Koç ; C. Paar.** The Montgomery Powering Ladder. *Cryptographie Hardware and Embedded Systems,* 2002, 291-302